# EUROPÄISCHE PATENTANMELDUNG

(11) **EP 0 661 461 A1**
(43) Veröffentlichungstag der Anmeldung: **05.07.1995**
(21) Anmeldenummer: 94117632.3
(22) Anmeldetag: 08.11.1994
(51) Int. Cl.: F15B 13/00, F16L 41/03

(54) **Anschlussvorrichtung für ein Wegeventil**

(30) Priorität: 06.12.1993 DE 9318645 U
(71) Anmelder: Herion-Werke KG, D-70736 Fellbach (DE)
(72) Erfinder: Ott, Helmut, D-73770 Denkendorf (DE)
(74) Vertreter: Leyh, Hans, Dr.-Ing.

(57) **Zusammenfassung**

Die Erfindung betrifft eine Anschlußvorrichtung (10) für ein pneumatisches Wegeventil (14), das mit einer Arbeitsöffnung (20) und einer Rücklauföffnung (22) versehen ist. Die Anschlußkanäle (32,34) für die Arbeitsöffnung (20) und die Rücklauföffnung (22) sowie die Anschlußstutzen (36,38) für den Anschluß von zu einem Verbraucher führenden Schlauchleitungen sind in einem einteiligen Block (12) ausgebildet, der auf das Ventil aufsetzbar (14) und an ihm befestigbar ist.

## Beschreibung

Die Neuerung betrifft eine Anschlußvorrichtung für ein insbesondere pneumatisches Wegeventil, das mit wenigstens einer Arbeitsöffnung und wenigstens einer Rücklauföffnung versehen ist.

Bei Ventilen dieser Art werden die Anschlüsse, z.B. die Arbeitsöffnung und die Rücklauföffnung des Ventiles mittels Schläuchen mit dem Verbraucher verbunden. Die Anschlußöffnungen können hierbei als kurze Rohrstutzen ausgebildet sein, an denen die Schläuche mit Hilfe von Überwurfmuttern befestigt werden.
Nachteilig bei dieser Verbindungsart ist es, daß beim Wechsel eines Ventils oder beim Anschluß eines Ventils an einen anderen Verbraucher die beiden Schläuche getrennt gelöst werden und auch markiert werden müssen, damit sie beim Wiederanschluß nicht verwechselt werden.

Diesem Nachteil sucht die Neuerung abzuhelfen.

Neuerungsgemäß wird dies dadurch erreicht, daß die Anschlußkanäle für die Arbeitsöffnung und für die Rücklauföffnung und die Anschlußstutzen für den Anschluß von zu einem Verbraucher führenden Schlauchleitungen in einem einteiligen Block ausgebildet sind, der auf das Ventil aufsetzbar und an ihm befestigbar ist.

Dieser die Anschlußvorrichtung bildende Block kann am Ventil durch beliebige geeignete Mittel befestigt werden, z.B. durch Schrauben, insbesondere kann aber auch vorgesehen sein, den Block und das Ventil mittels einer einzigen gemeinsamen Schraube an einer Grundplatte zu befestigen.

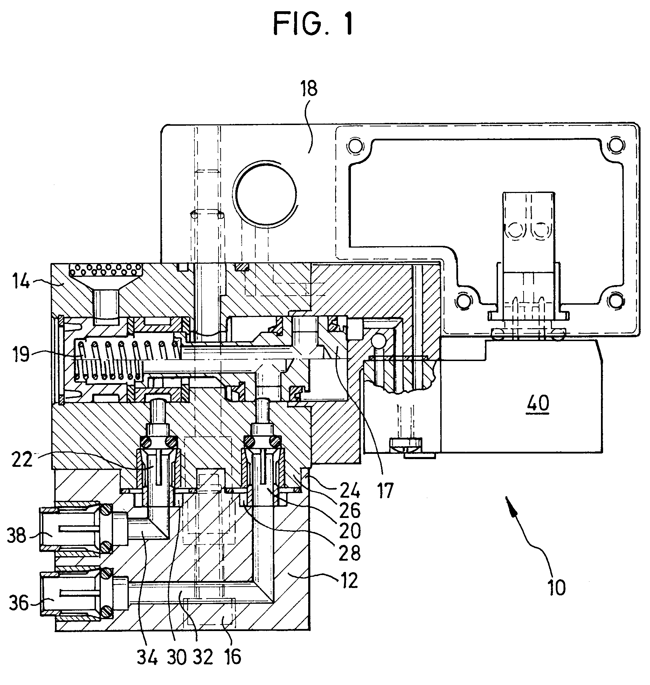

Eine beispielsweise Ausführungsform der Neuerung wird nachfolgend anhand der einzigen Figur der Zeichnung erläutert, die im Schnitt schematisch ein Ventil mit der neuerungsgemäßen Anschlußvorrichtung zeigt.

Die Anschlußvorrichtung 10 besteht aus einem einteiligen Block 12 aus Metall oder Kunststoff, der auf eine ebene Anschlußfläche des Ventils 14 aufsetzbar ist, wobei in dieser Anschlußfläche Anschlußöffnungen 20, 22, z.B. in Form kurzer Rohrstutzen ausgebildet sind. Diese Anschlußöffnungen 20, 22 können beispielsweise der Arbeitsanschluß und der Rücklaufanschluß des Ventils 14 sein, die zu einem nicht gezeigten Verbraucher führen.
Der Block 12 kann in jeder geeigneten Weise am Ventil 14 befestigt werden, beispielsweise können aber auch der Block 12 und das Ventil 14 mittels einer einzigen Schraube 16 an einer Grundplatte 18 angeschraubt werden.
Der Block 12 hat an seiner dem Ventil 14 zugewandten Fläche eine kreisförmige Ausnehmung, so daß ein ringförmiger Rand 24 gebildet wird, der auf einen entsprechenden kreisförmigen Bund 26 des Ventiles 14 so aufsetzbar ist, daß der Rand 24 des Blockes 12 den Bund 26 des Ventiles 14 umschließt und durch den Rand 24 und den Bund 26 eine Zentrierung für den Block 12 gebildet wird.

Im Ventil 14 ist ein durch eine Feder 19 belastetes Ventilelement 17 eingebaut, das axial bewegbar und mittels einer Vorsteuerung 40 ansteuerbar ist.
Die Funktion des Ventiles selbst ist aber nicht Gegenstand der Neuerung.

In der dem Ventil 14 zugewandten Stirnfläche des Blockes 12 sind zwei Bohrungen 28 und 30 ausgebildet, welche über die hier als kurze Rohrstutzen ausgebildeten Anschlußöffnungen 20 und 22 des Ventiles 14 greifen.
Zwischen dem Block 12 und dem Ventil 14 sind nicht näher bezeichnete Dichtungen, z.b. in Form von 0-Ringen eingebaut, wobei jede der Anschlußöffnungen 20, 22 von je einem O-Ring konzentrisch umschlossesn ist.
Von der Bohrung 28 geht ein Kanal 32 ab, und von der Bohrung 30 geht ein Kanal 34 ab, wobei diese beiden Kanäle im Block 12 ausgebildet sind. Die Kanäle 32 und 34 münden in eine Seitenfläche des Blockes 12,und sie sind an ihren Enden erweitert und in das erweiterte Ende des Kanales 32 ist ein Rohrstutzen 36 und in das erweiterte Ende des Kanales 34 ist ein Rohrstutzen 38 eingesetzt, z.B. eingepreßt oder eingeschraubt, wobei zwischen den Rohrstutzen 36, 38 und dem Block 12 geeignete Dichtringe, z.B. nicht näher bezeichnete 0-Ringe vorgesehen sind.
An den Rohrstutzen 36, 38 können dann, was nicht dargestellt ist, flexible Schläuche befestigt werden, die zu einem Verbraucher führen.

Wie ersichtlich, kann der Block 12 zusammen mit den Rohrstutzen 36, 38 und den daran befestigten, aber nicht gezeigten Schläuchen, als Ganzes vom Ventil 14 abgenommen werden, wobei im dargestellten Beispiel nur die Schraube 16 zu lösen ist.
Eine Einzelabnahme der Schläuche ist hier nicht mehr erforderlich, und es kann auch keine Verwechslung der beiden Schläuche beim Wiederanbringen am selben oder an einem anderen Ventil auftreten. Das Ventil kann ausgewechselt werden oder der Block kann an irgendeinem anderen Ventil angebracht werden, so daß schnell und zuverlässig der Verbraucher an ein anderes Steuerventil angeschlossen werden kann.

## Patentansprüche

1. Anschlußvorrichtung für ein insbesondere pneumatisches Wegeventil, das mit wenigstens einer Arbeitsöffnung und wenigstens einer Rücklauföffnung versehen ist, **dadurch gekennzeichnet**, daß die Anschlußkanäle (32, 34) für die Arbeitsöffnung und die Rücklauföffnung (20, 22) und die Anschlußstutzen (36, 38) für den Anschluß von zu einem Verbraucher führenden Schlauchleitungen in einem einteiligen Block (12) ausgebildet sind, der auf das Ventil (14) aufsetzbar und an ihm befestigbar ist.

2. Anschlußvorrichtung nach Anspruch 1, **dadurch gekennzeichnet**, daß der Block (12) zusammen mit dem Ventil (14) mittels einer einzigen Schraube (16) an einer Grundplatte (18) anschraubbar ist.
